# EUROPEAN PATENT APPLICATION

(11) **EP 0 713 731 A1**
(43) Date of publication of application: **29.05.1996**
(21) Application number: 95301196.2
(22) Date of filing: 23.02.1995
(51) Int. Cl.: B05D 1/28, B05D 1/24, B24D 18/00, B05C 19/00

(54) **Applying grit particles to a continuous web**

(30) Priority: 25.11.1994 GB 9423853
(71) Applicant: Netlon Limited, Blackburn Lancashire BB2 4PJ (GB)
(72) Inventor: Orr, Brian, Nr Preston, Lancashire, PR5 0JE (GB)
(74) Representative: Lyndon-Stanford, Edward Willoughby Brooke

(57) **Abstract**

In order to apply hot grit particles 2 to a continuous thermoplastic web 12 such as a geonet, the web 12 is brought to the upper part of the surface of a roller 3 which is rotating in a container 1 containing grit particles 2. A controlled layer of grit particles is carried up over the upper part of the roller 3, and the particles are heated by halogen emitters 10 and are pressed into the web 12, causing local melting of the web 12 so that the grit particles are embedded and firmly retained. Grit particles 2 are added to a hopper 1b and the top surface of the mass of grit particles 2 adjacent the ascending part of the roller surface is kept at a controlled level below the uppermost part of the roller 3. Surplus grit particles 2 not taken up by the web 12 are recirculated by interaction with the roller surface.

## Description

### Background of the Invention

The present invention relates to a method of, and apparatus for, continuously applying grit particles to a continuous web. A roller is provided which is rotating about a substantially horizontal axis, and a (thin) layer of grit particles is provided on the upper part of the roller peripheral surface. The web is guided in a path which brings it into a contact zone which is at the upper part of the roller peripheral surface and in which grit particles are picked up by the web. Such a method and apparatus are disclosed in Figures 8 to 10 of GB 2 255 292A.

By "continuous" is meant continuous in the normal manufacturing sense, although the webs normally have a finite length and the apparatus is not running all the time.

The apparatus shown in Figures 8 to 10 of GB 2 255 292A is relatively complex and expensive, and special care must be taken in order to control the even distribution of the grit particles on the upper part of the roller peripheral surface, which makes it difficult to increase the width of the machine in order to grit wider webs. The practical maximum width of this type of distribution mechanism was very roughly two metres; for product widths greater than this a plurality of such mechanisms would be required. A doctor blade is used to provide the final control of the grit particle distribution. A particular problem with a doctor blade is that a small amount of maladjustment causes a relatively large difference in the thickness of the grit particle layer, exacerbated in this case because the grit particles will cause fairly rapid wear of the blade. Wear of 0.01 or 0. 1 mm can be significant.

It is desirable to simplify the apparatus and make it less expensive. It is desirable to simplify the control of the distribution of the hot grit particles.

### The Invention

According to the invention, the roller rotates with at least a portion of the ascending part of its peripheral surface in a container containing the grit particles, and carries the grit particles up onto the upper part of the roller peripheral surface, grit particles being added to the container as grit particles are picked up by the web (ie secured or adhered to the web) whilst maintaining the top surface of the mass of grit particles adjacent the ascending part of the roller peripheral surface at a controlled level below the uppermost part of the roller. Surplus grit particles not removed by the web are recirculated; preferably they are recirculated under the roller, within said container, at least in part by interaction with the roller peripheral surface, though any suitable form of recirculation can be employed.

The apparatus of the invention is very simple, and permits increase in the width of the web without impairing the distribution of the grit particles. With the present invention, there is no difficulty in designing and making a machine for gritting a web having a width of 6 or 7 metres. The apparatus is self-regulating and a uniform grit particle layer is provided by friction and quasi fluid dynamics. Apart from keeping the container supplied with the appropriate amount of grit, no further control appears to be necessary. There are very few working parts, and thus maintenance is simple. There is no need for special distribution arrangements for the grit particles and no need for mechanical implements such as doctor blades.

Provided the level of the surface of the mass of grit particles on the ascending side of the roller is sufficiently high, and provided there is sufficient friction or engagement between the roller peripheral surface and the grit particles for the transport (and recirculation if required) of the grit particles, the roller peripheral surface can be smooth or not smooth though it is believed that a polished roller would be inappropriate; preferably there is a positively controlled roughness, achieved by for instance shot-blasting, machining a pattern or grooving or knurling. The roller peripheral surface can be provided with grooves extending parallel to the roller axis, which can be formed by knurling. The optimum groove depth and width is related to the maximum grit particle size, and should be of sufficient size to contain and transport (and recirculate if required) the grit particles efficiently. One successful embodiment has been found to be where each groove is large enough to hold at least one grit particle as viewed in cross-section in such a way that no more than half of the grit particle projects beyond a circle at the radius of the crests separating the grooves and the width of each groove is large enough to enable at least parts of at least two grit particles to engage in the groove, as viewed in cross-section. It is found that if such grooves are provided, grit particles in the grooves pick up a further layer of grit particles which are above the crest of the grooves and are carried over the top of the roller; part of this further layer is transferred to the web whilst the remainder of the grit particles on the roller are recirculated.

The thickness of the layer above the crests of the grooves, or of the layer on a smooth roller, seems to be determined by the pick-up slope of the grit on the ascending or feed side of the roller. As the roller peripheral surface rises, grit can be seen falling back until the roller peripheral surface reaches a pick-up point, after which there is no significant fall-back of grit particles and the thickness of the grit layer remains the same. It is believed that as long as the tangent to the pick-up point intercepts the surface of the mass of grit particles in the container, proper pick-up can be maintained. This is best done by placing a control member in the container adjacent the ascending part of the roller peripheral surface but at a distance from the roller peripheral surface significantly greater than the thickness required for the controlled layer of grit particles and positioned such that its lower edge is below said tangent. However, it is not essential to provide such a member. If the control member is present, the falling-back grit particles form a small heap between this control member and the ascending part of the roller peripheral surface. Though the control member may be adjustable, it is found that within reasonable limits, differences in the level of the grit particles in the container do not make any difference to the thickness of the layer of grit particles being carried up over the top of the roller, provided this control member is fitted.

Compared to a doctor blade, the control member is a large distance from the roller peripheral surface. The control member is not expected to wear significantly, but if it does, the wear would have no appreciable effect on the distribution of the grit particles in the contact zone as the control member does not directly control the thickness of the grit particle layer, though it does control the position of the pick-up point; however, as an example, a degree difference in the pick-up point would make very little difference to the layer thickness but would represent a distance of 5 mm on the peripheral surface of the roller. Thus accurate control can be provided and maintained.

When the web contacts the grit particles, only the thin upper layer of the grit particles need be picked up by (indented into or adhered to) the surface of the web. If the web is a mesh structure (net or grid), only the outer surfaces of the strands on one face pick up the grit; as the strands may provide only 10 to 15% of the surface area, very little of the grit from the peripheral surface of the roller is taken up by the web; it is believed that only about 3% of the grit particles being carried up over the roller peripheral surface are taken up by the web. If the web is imperforate, this percentage will be higher and, at least in theory, the percentage could be substantially 100% with an appropriate roller surface. However the remaining grit particles fall from the roller onto a drop-off pile and are recirculated to the ascending part of the roller peripheral surface, the drop-off pile remaining substantially constant in size.

In the preferred embodiment, where there is recirculation under the roller, within the container, it is believed that there is a laminar movement of grit around the lower peripheral surface of the roller, driven by the peripheral surface of the roller, equal to the amount falling from the roller, this amount being made up to the total amount of grit being carried up over the top of the roller by automatically picking up grit particles from the container. This recirculation could be assisted by additional means.

The gap between the web and the roller surface must be adjusted in accordance with the thickness of the web, but once adjusted can be left fixed. If the grit particles are not to be pressed fully into the web but project from the web, the gap should be slightly greater than the thickness of the web or approximately equal to the thickness of the web, thereby avoiding any squeeze down.

The grit particles can be secured or adhered to the web in any suitable way, eg by heating the web and/or the grit particles or by applying adhesive to the web and using heated or unheated grit particles (heating the grit particles can at least assist in setting or drying the adhesive). In a preferred mode, the web or at least its surface is thermoplastic and the grit particles are heated (eg by radiant heaters or by flame heating) to a temperature such that in the contact zone, the heated grit particles cause local softening or melting of the web surface and are on cooling embedded in and firmly retained by the web. The thermoplastic can be any suitable thermoplastic, such as high density polyethylene (HDPE) or polypropylene (PP). Due to the self-regulation, such temperature distortion as occurs in the feed control member or in the container or on the roller has very little effect on the amount of grit particles picked up by the web.

The temperature of the grit particles can be sensed using temperature sensing means such as a thermocouple downstream of the contact zone and adjacent the descending part of the roller surface, preferably below the level of the roller axis, so that the sensing means are in the path of and engaged by the falling grit particles. By sensing the temperature at this point, the heating means output can be controlled appropriately.

In the preferred embodiment, the web is at or close to ambient temperature to minimise the amount of material that softens or melts to flow around the grit and to ensure that this softened or molten material cools and sets as quickly as possible after the grit has been enrobed. However, for reasons, for example, of speeding up manufacturing rates, it may be advantageous to warm the web at machine entry, though, if this is done, it may then also be desirable to cool the web, eg by forced draught, after the grit has been applied.

The grit particles can be heated while on the upper part of the roller peripheral surface, before they reach the contact zone, ie while they are in a thin layer. This means that start-up can be very rapid as very little time is required in order to heat up the grit particles being carried into the contact zone, which is in the upper quadrant of the descending part of the roller peripheral surface. Preferably, the heating zone terminates as close as practicable to the contact zone. If the roller is smooth, the pick-up point is higher so that there is less time for heating the grit particles as they pass over the top of the roller.

The web can be an imperforate membrane such as a geomembrane, or can be a net such as a drainage net or geonet, or can be a more robust mesh structure such as a geogrid. Specific examples of geomembrane, geonets and geogrids are given in GB 2 255 292A (equivalent to which is US patent application serial number 07/877143 filed 1 May, 1992 by Frank Brian Mercer and Brian Orr). In another alternative, the web could be a fabric with either an adhesive or a thermoplastic coating on the face contacting the grit, for the manufacture of for instance emery cloth.

A large range of grit sizes can be used, eg. down to about 200 microns maximum dimension for emery cloth, though for geo use a preferred size is about 700 microns maximum dimension. The types of grit can be as in GB 2 255 292 A, page 6, line 15 to page 7, line 1, as referred to above.

### Preferred Embodiments

The invention will be further described, by way of example, with reference to the accompanying drawings, in which:
Figure 1 is a vertical section through a first gritting machine in accordance with the invention, along the line I-I in Figure 2;
Figure 2 is a schematic plan view of the gritting machine of Figure 1;
Figure 3 is a detail, taken in vertical section along the line III-III of Figure 2, showing the knurling on the roller;
Figure 4 is a vertical section, corresponding to that of Figure 1, through a second gritting machine in accordance with the invention; and
Figure 5 is a vertical section, corresponding to that of Figure 1, through a third gritting machine in accordance with the invention.

### Figures 1 to 3

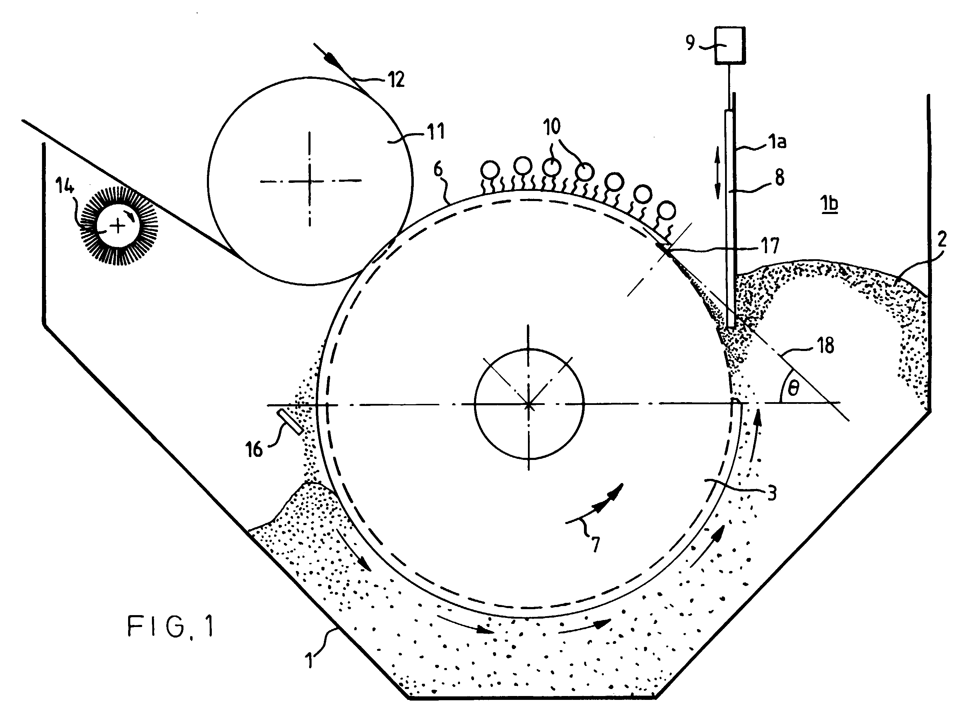

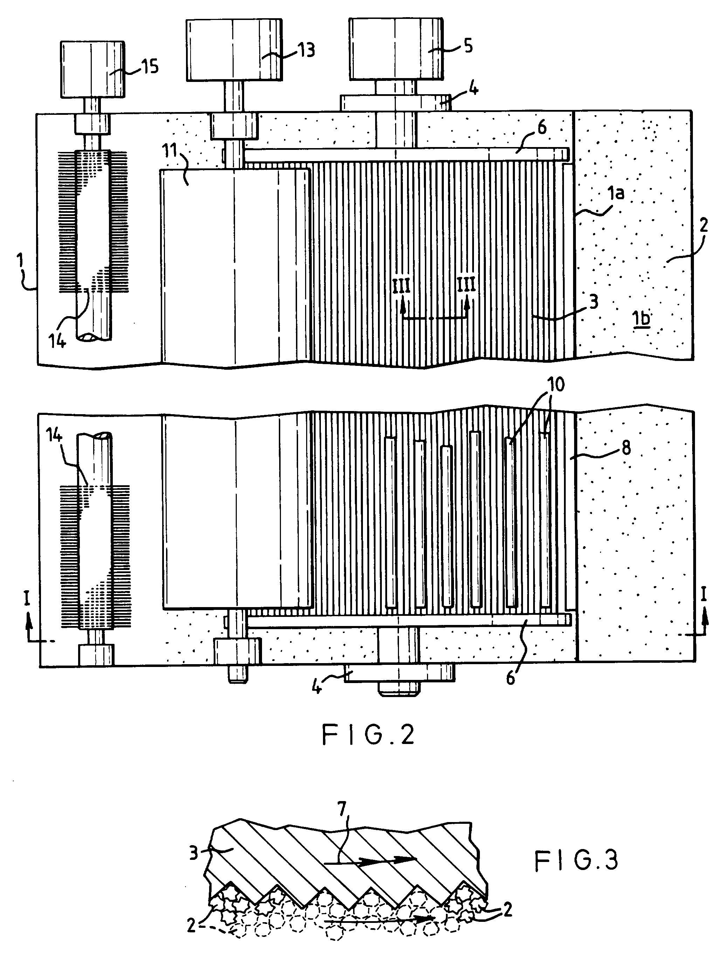

The machine has a container 1 (which includes a cross-wall 1a defining a hopper 1b) containing grit particles 2. A roller 3 is mounted for rotation about a horizontal axis by means of bearings 4 which are protected from the grit particles, and rotating means or a drive 5 is indicated schematically. The peripheral surface of the roller 3 is knurled so as to have grooves extending parallel to the axis (see Figure 3). The roller 3 has smooth flanges 6 (the near flange 6 is shown partly cut-away in Figure 1) to minimise fall-off from the sides of the roller, and to ensure a more constant thickness of the grit particles up to the edges of the roller 3. If the level of the mass of grit particles 2 on the ascending side of the roller 3 is suitably chosen (and not too high), the pick-up by the flanges 6 is minimal. The direction of rotation of the roller 3 is indicated by a double-headed arrow 7. A vertically-moveable control member or gate 8 is mounted in the container 1 adjacent the ascending side of the roller 3 and defines one side of the hopper 1b. The gate 8 is for adjusting the level of the surface of the mass of grit particles 2 adjacent the ascending part of the roller surface. A gate height adjustor (adjustment means) 9 is shown schematically in Figure 1. Over the upper part of the roller peripheral surface (as shown, over the uppermost 45° of the ascending part of the roller peripheral surface and also preferably beyond the centre line of the roller 3) there are heating means in the form of radiant heaters 10 (eg. a bank of halogen infra-red emitters shown partially cut-away in Figure 2), for heating the grit particles 2 on the upper part of the roller peripheral surface. A cover (not shown) is provided for the radiant heaters 10. Adjacent the upper quadrant of the descending part of the roller peripheral surface, there is a guide roller 11 which guides a continuous thermoplastic web 12 (eg. a geomembrane, geonet or geogrid) in a path which brings it into a contact zone over the part of the guide roller 11 which is nearest the main roller 3, where it contacts grit particles 2 on the main roller 3. The guide roller 11: a) may be an idle roller driven by the moving web 12 which is driven by another drive roller (not shown), or b) may be an idle roller, the moving web 12 being driven by the main roller 3, or c) can have a drive 13 indicated schematically in Figure 2. The axis of the guide roller 11 can be moved to adjust the gap between the guide roller 11 and the roller 3. In the contact zone, the web 12 and the peripheral surface of the roller 3 are moving at substantially the same speed and in the same direction. The web 12 can have the same width as the guide roller 11 (which is slightly narrower than the main roller 3) or be narrower, as desired. A rotary brush 14 is provided for brushing off excess grit particles, a drive 15 being indicated schematically. Temperature sensing means in the form of thermocouple 16 are placed downstream of the contact zone and below the level of the axis of the roller 3 so that they are in the path of falling grit particles 2 as they tend to fall off the surface of the roller 3.

The container 1 is such that there is sufficient distance between the bottom of the roller 3 and the bottom of the container 1 to avoid any significant pressure against the roller 3 and consequent grinding of the surface of the roller 3.

Figure 1 indicates the pick-up point 17 and the tangent 18 to this point 17, which is at an inclination of θ to the horizontal. The gate 8 is adjusted so that it is intercepted by the tangent 18.

The single-headed arrows indicate laminar flow of the grit particles 2 under and close to the roller 3, from the descending part of the roller 3 to the ascending part.

Though not shown, a sprayer or a coating roller can be included after the rotary brush 14 for applying to the web 12 a thin retaining coating, eg. having a thickness not greater than 0. 1 mm, to hold in place any grit particles 2 which are not properly keyed in position, to avoid dislodging such particles during handling. The coating can be flexible varnish or latex. The sprayer or coating roller can be followed by suitable dryers (not shown).

### Example

Web 12: any of the webs specifically described in GB 2 255 292A.
Material of web 12: HDPE, melting at 135° to 140°C. Gap between roller 11 and roller 3: equals thickness of web 12.
Diameter of roller 3: 508 mm.
Material of roller 3: mild steel.
Diameter of roller 11: 254 mm.
Material of roller 11: mild steel.
Speed of roller 3: such as to provide a surface velocity of 5 m/minute (equal to the speed of the web 12), which could be increased to 10 m/minute.
Width of roller 3: up to 3 m.
Depth of flanges 6: 12 mm.
Grit size: all passes through 40 mesh to inch sieve (maximum dimension about 700 microns).
Knurling trough-to-crest: 1 mm.
Knurling crest to crest distance: 1. 625 mm.
Knurling trough angle: 75°.
Pick-up point: 43° before top dead centre of roller 3.
Grit fall-off point: 47° after top dead centre of roller.
Angle θ: 43°.
Guide roller 11 position: axis is 45° from top dead centre of roller 3.
Radiant heaters 10: halogen infra-red emitters of heating capacity 25 kW per metre width of the roller 3 (for a speed of 5 m/minute).
Pass time under the halogen infra-red emitters 10: 2.4 seconds.
Grit temperature in contact zone: 280° - 300°C.
Grit temperature at thermocouple 16: 250°C.
Position of gate 8: the surface facing the roller 3 is on a plane which is spaced 12. 5 mm from the nearest part of the roller surface.
Height of the bottom of the gate 8: 104 mm above the axis of the roller 3.

It is believed that for machines of greater width, the only dimensions given above that would need to be changed are the diameters of rollers 3 and 11.

### Figure 4

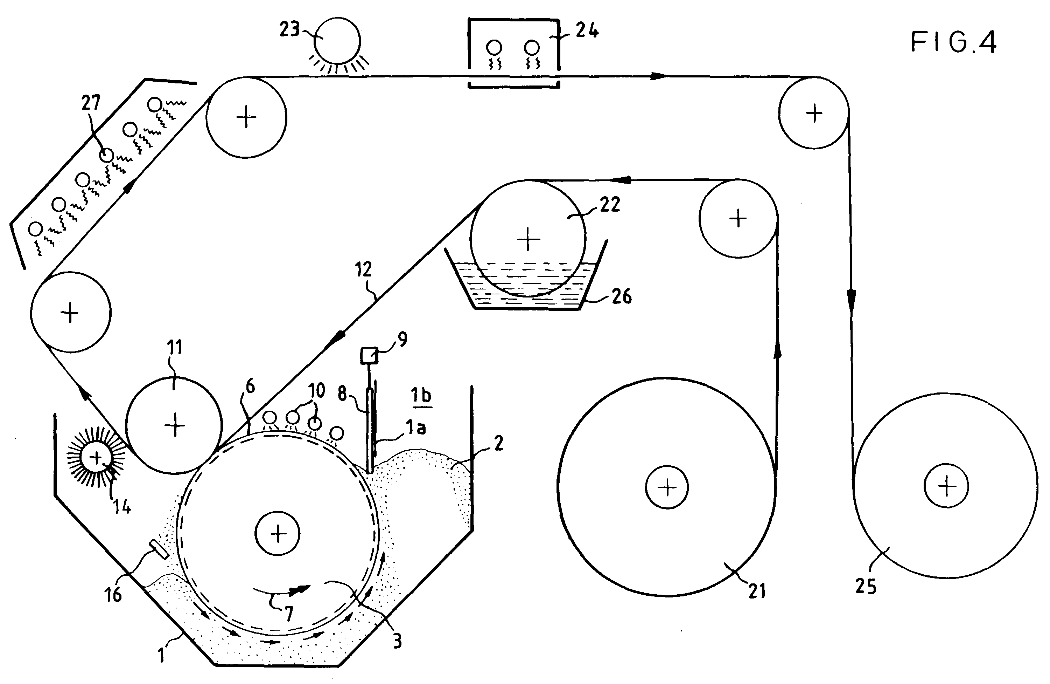

In Figure 4, references which are the same as those in Figures 1 to 3 indicate items which are the same or similar. The web 12 is taken off a let-off reel 21, over an applicator or coating roller 22, beneath a lacquer spray 23 and a lacquer setting heater 24, and to a take-up reel 25. The coating roller 22 dips into a bath 26 containing an adhesive such as an aqueous adhesive. If desired, the gritted web 12 can be heated by any suitable heaters 27 to provide good bonding of the grit 2 and can be dried using drying tunnels or fans (not shown).

Alternatively or in addition, it is possible to incorporate the heaters 10 shown in Figure 1 (and the thermocouple 16 if desired) and use the hot grit particles 2 to assist in drying or setting the adhesive, reducing the need for, or eliminating, complex drying tunnels or fans.

### Figure 5

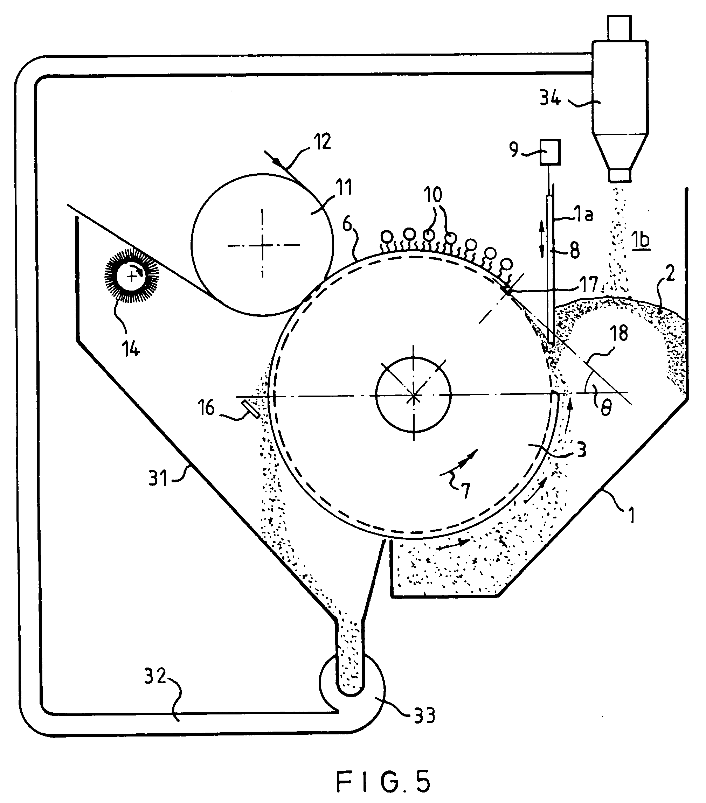

In Figure 5, references which are the same as those in Figures 1 to 3 indicate items which are the same or similar. Only the ascending part of the peripheral surface of the roller 3 is in the container 1. There is a separate return hopper 31 on the descending side of the roller 3 with a positive recirculation device 32 for recirculating the unused portion of the layer of grit particles 2 to the ascending side of the roller 3, ie to the container 1, in the case illustrated specifically to the hopper 1b. The recirculation device 32 is illustrated schematically as comprising a fan 33 and a cyclone 34, but any suitable recirculation device can be used, for instance a screw conveyor or a bucket conveyor.

In Figure 5, the hopper 31 could be divided from the container 1 by a single dividing wall taken up to the lower part of the peripheral surface of the roller 3.

The present invention has been described above purely by way of example, and modifications can be made within the spirit of the invention.

## Claims

1. A method of continuously applying grit particles 2 to a continuous web 12 and thereby gritting the web 12, comprising providing a roller 3 which is rotating about a substantially horizontal axis, supplying grit particles 2 to the upper part of the roller peripheral surface, and guiding the web 13 in a path which brings it into a contact zone at the upper part of the roller peripheral surface and in which grit particles 2 are picked up by the web 12, characterised in that at least a portion of the ascending part of the peripheral surface of said roller 3 is in a container 1 containing grit particles 2, the roller 3 carries a controlled layer of the grit particles 2 up onto the upper part of its peripheral surface, grit particles 2 are added to the container 1 as grit particles 2 are removed by the web 12 whilst maintaining the top surface of the mass of grit particles 2 adjacent the ascending part of the roller peripheral surface at a controlled level below the uppermost part of the roller 3, and any unused portion of said layer of grit particles 2 is recirculated.

2. The method of Claim 1, wherein the unused portion of said layer of grit particles 2 is recirculated under the roller 3, within said container 1.

3. The method of Claim 1 or 2, wherein the web 12 has a thermoplastic surface, the grit particles 2 are heated to a temperature such that in the contact zone, the heated grit particles 2 cause local softening or melting of the web surface and on cooling are embedded in and firmly retained by the web 12, and the distance of the web 12 from the roller surface in the contact zone is such that the grit particles 2 are pressed into the web 12.

4. The method of Claim 3, wherein the grit particles 2 are not pressed fully into the web 12 but project from the web 12.

5. The method of Claim 1 or 2, wherein the grit particles 2 are heated (10) before they are applied to the web 12.

6. The method of any of Claims 3 to 5, wherein the grit particles 2 are heated (10) while on the upper part of the roller peripheral surface, before they reach the contact zone.

7. The method of Claim 6, wherein the grit particles are heated by radiant heaters 10.

8. The method of any of Claims 3 to 7, wherein the temperature of the grit particles 2 is sensed using temperature sensing means 16 downstream of the contact zone and adjacent the descending part of the roller peripheral surface, which sensing means 16 are placed in the path of falling grit particles 2.

9. The method of Claim 1 or 2, wherein adhesive (22, 26) is applied to the web 12 before the web 12 reaches the contact zone, and causes the grit particles 2 to adhere to the web 12.

10. The method of Claim 1, 2 or 5, or of any of Claims 6 to 8 when read as appendant to Claim 5, wherein adhesive (22, 26) is applied to the web 12 before the web 12 reaches the contact zone and causes the grit particles 2 to adhere to the web 12, the heat of the grit particles 2 at least assisting in setting or drying the adhesive.

11. The method of any of the preceding Claims, wherein the roller 3 has a peripheral surface provided with grooves extending parallel to the roller axis.

12. The method of any of the preceding Claims, wherein the thickness of the layer of grit particles 2 can be adjusted by adjusting the height of the top surface of the mass of grit particles 2 adjacent the ascending part of the roller peripheral surface by raising and lowering a member 8 which is placed in the container 1b adjacent the ascending part of the roller peripheral surface.

13. Apparatus for continuously applying grit particles 2 to a continuous web 12, the apparatus comprising a roller 3 mounted for rotation about a substantially horizontal axis, means 5 for rotating the roller 3, a container 1 for containing grit particles for supply to the roller 3, and means for guiding a web 12 in a path which brings it into a contact zone at the upper part of the roller peripheral surface whereby in the contact zone, the web 12 contacts grit particles 2 and is gritted thereby, characterised in that at least a portion of the ascending part of the roller peripheral surface is in the container 1, and there are means 8 for controlling feed of grit particles 2 to part 1b of the container 1 adjacent the ascending part of the roller peripheral surface such that the top surface of the mass of grit particles 2 adjacent the ascending part of the roller peripheral surface is at a controlled level below the uppermost part of the roller peripheral surface, to provide in the contact zone in operation a layer of grit particles 2 of a controlled thickness.

14. The apparatus of Claim 13, wherein at least the lower part of the roller 3 is in the container 1, whereby in operation the unused portion of said layer of grit particles 2 is recirculated under the roller 3, within said container 1.

15. The apparatus of Claim 13 or 14, and comprising means 10 for heating the grit particles 2 before they are applied to the web 12.

16. The apparatus of Claim 13 or 14, comprising means 10 for heating the grit particles 2 before they are applied to the web 12 so that the grit particles 2 cause local softening or melting of the web 12 and are embedded in and firmly retained by the web 12 on cooling.

17. The apparatus of Claim 15 or 16, wherein the heating means 10 are located for heating the grit particles 2 whilst they are on the upper part of the roller peripheral surface, before they reach the contact zone.

18. The apparatus of Claim 17, wherein the heating means are radiant heaters 10.

19. The apparatus of any of Claims 15 to 18, and comprising temperature sensing means 16 downstream of the contact zone and adjacent the descending part of the roller peripheral surface below the level of the roller axis, for sensing the temperature of grit particles 2 which are carried over by the roller peripheral surface and engage the temperature sensing means 16.

20. The apparatus of Claim 13 or 14, and comprising means 22, 26 for applying adhesive to the web 12 before the web 12 reaches the contact zone.

21. The apparatus of Claim 13, 14 or 15, or of any of Claims 17 to 19 when read as appendant to Claim 15, and comprising means 22, 26 for applying adhesive to the web 12 before the web 12 reaches the contact zone.

22. The apparatus of any of Claims 13 to 21, wherein the roller peripheral surface is not smooth.

23. The apparatus of any of Claims 13 to 21, wherein the roller peripheral surface is provided with grooves extending parallel to the roller axis.

24. The apparatus of any of Claims 13 to 23, wherein said feed control means comprise a vertically-moveable member 8 in the container 1, adjacent the ascending side of the roller peripheral surface, for adjusting the level of the surface of the mass of grit particles 2 adjacent the ascending part of the roller peripheral surface, the member 8 being spaced from the roller peripheral surface by a distance significantly greater than the thickness required for the controlled layer of grit particles 2.
